# EUROPEAN PATENT SPECIFICATION

(11) **EP 2 942 608 B1**
(45) Date of publication and mention of the grant of the patent: **30.10.2019**
(21) Application number: 15158924.9
(22) Date of filing: 13.03.2015
(51) Int. Cl.: G01G 19/04

(54) **Weighing system for weighing rail vehicles**
Wiegesystem für das Wiegen von Schienenfahrzeugen
Système de pesage pour le pesage des véhicules ferroviaires

(30) Priority: 05.05.2014 IT RM20140221
(43) Date of publication of application: 11.11.2015
(73) Proprietor: IVM S.r.l., 80053 Castellammare di Stabia (Napoli) (IT)
(72) Inventor: Mannara, Francesco, 80053 Castellammare di Stabia (Napoli) (IT)
(74) Representative: Carangelo, Pierluigi

(56) References cited:
- EP-A2- 1 288 638
- DD-A1- 135 239
- US-A- 2 195 451

## Description

The present invention relates to a weighing system for measuring the weight or mass of rail vehicles, namely vehicles, wagons, locomotives, construction and installation machines applicable to and movable on rails. US2195451A, DD135239A1, EP1288638A2 describe prior art weighing system according to the preamble of claim 1.

The weighing of rail vehicles may be carried out statically, noting a structural response, in particular a deformation of a structure on which the stationary rail vehicle is placed and supported, or dynamically, by detecting a structural response, in particular a deformation and/or vibration of the structure on which the rail vehicle passes, resting thereon with a known speed.

The structural response may be in fact the deformation of a relative pressure or force sensor (a so-called "load cell") calibrated so as to provide a weight or mass value as a function of the deformation suffered or, alternatively, the structural response may be the deformation of a support structure of the rail, such as a portion of a railway bridge or a weighing platform the structural response of which, for example a characteristic load-deformation curve, has been previously determined by applying known loads and measuring the deformation for each known load applied.

In practice it is known of to replace a section of rail and build a reinforced concrete platform equipped with load cells for weighing the rail vehicle. This solution offers a good accuracy of weighing, but is very expensive to construct and maintain.

It is also known of to make a reinforced concrete platform equipped with load cells for weighing a rail vehicle alongside an existing rail and transferring the rail vehicle using a crane from the rail to the platform on which the weighing takes place. This solution provides a good accuracy of weighing, but is expensive and not very easy to use.

It is also known of to measure the deformation of the rails to determine the weight applied to them. This system is relatively inexpensive and requires only the installation of displacement and/or strain sensors on the rail. However, the accuracy of measurement is unsatisfactory and varies in a manner hard to control depending on various surrounding conditions, such as the temperature and the installation conditions of the displacement and/or strain sensor.

It is also known of to measure the weight of rail vehicles, interposing load cells between the rail and the underlying laying surface. This system has the drawback that the rail must deform in order to transfer the load of the rail vehicle onto the load cell and the laying surface is not infinitely stiff. As a result, the resistance against deformation of the rail and the flexibility of the laying surface introduce a hard to control measurement error.

The purpose of the present invention is therefore to provide a method and a system for weighing rail vehicles, with characteristics such as to overcome at least some of the drawbacks of the prior art.

A further purpose of the invention is to reduce the costs of the weighing system and the operating costs of weighing compared to systems of the prior art.

A further particular purpose of the invention is to speed up and facilitate the weighing operation of rail vehicles.

Yet a further purpose of the invention is to provide a method and a weighing system for rail vehicles that ensures high weighing accuracy regardless of external conditions.

Yet a further purpose of the invention is to provide a method and a weighing system for rail vehicles that can be used without the use of cranes or other heavy equipment and in any section of rail and thus even in areas remote from railway stations or service centres.

These and other purposes are achieved by a system for weighing rail vehicles according to claim 1 and by a weighing method according to claim 11. The dependent claims refer to advantageous embodiments.

For a clearer understanding of the invention and its advantages some of its embodiments, made by way of non-limiting examples, will be described below with reference to the appended drawings, wherein:

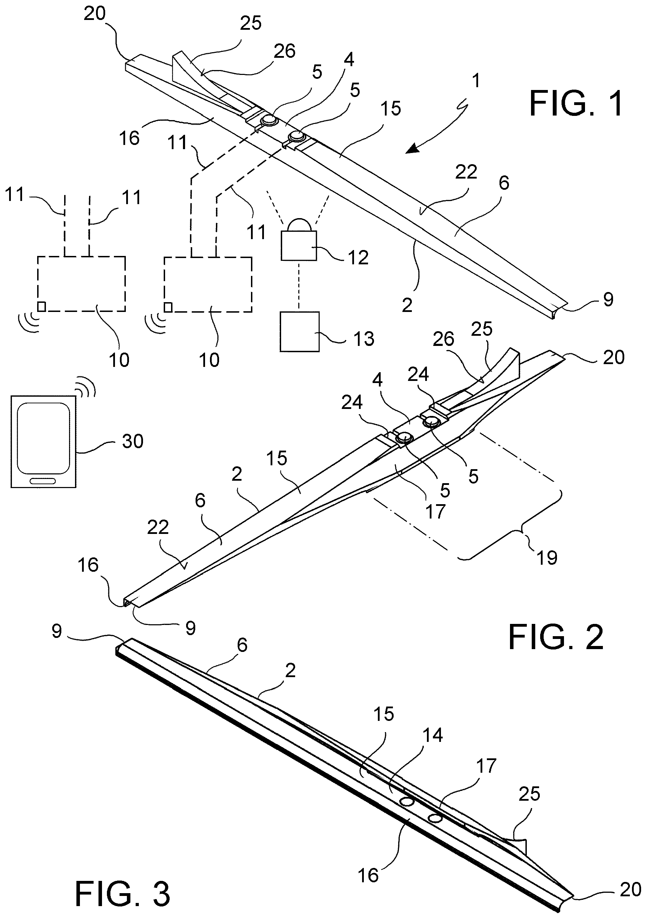

figures 1 and 2 are perspective views from above of a detection support of the weighing system according to one embodiment (in the example, the support is adapted to the left rail seen in the forward direction of the vehicle);
figure 3 is a perspective view from below of the detection support in figure 1;

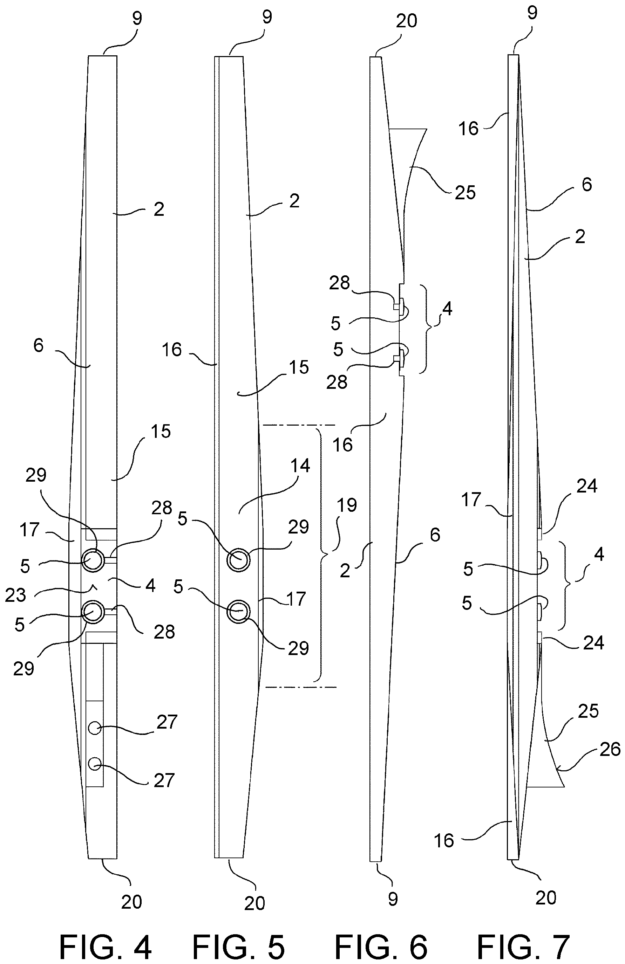

figure 4 is a view from above of the detection support in figure 1;
figure 5 is a view from below of the detection support in figure 1;
figures 6 and 7 are side views of the detection support in figure 1;

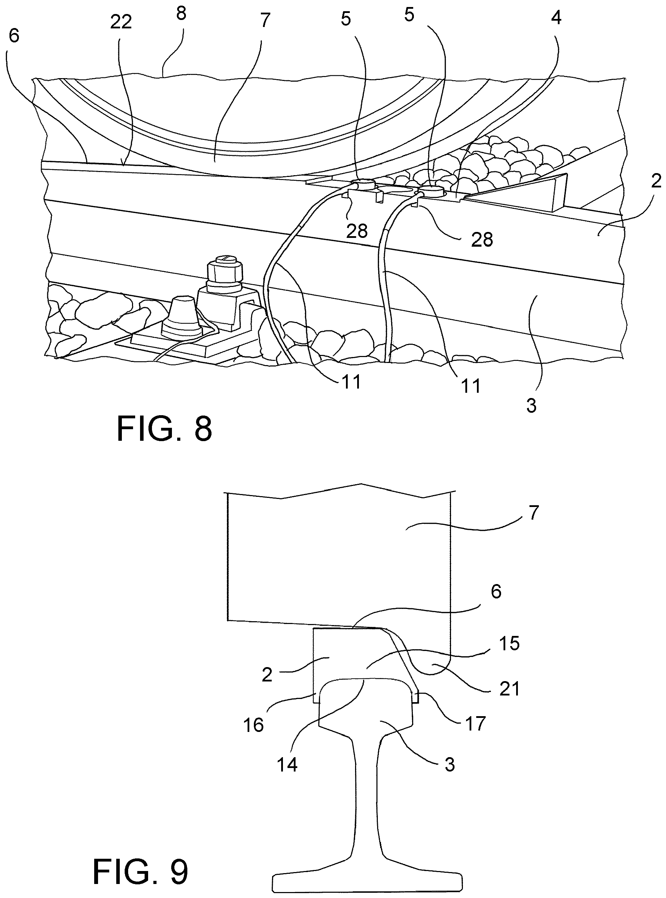

figure 8 shows the weighing system with a detection support applied to a rail profile and to a wheel of a rail vehicle resting on a ramp of the detection support;
figure 9 shows the situation in figure 8 in a cross-section view according to a vertical support plane of the wheel;

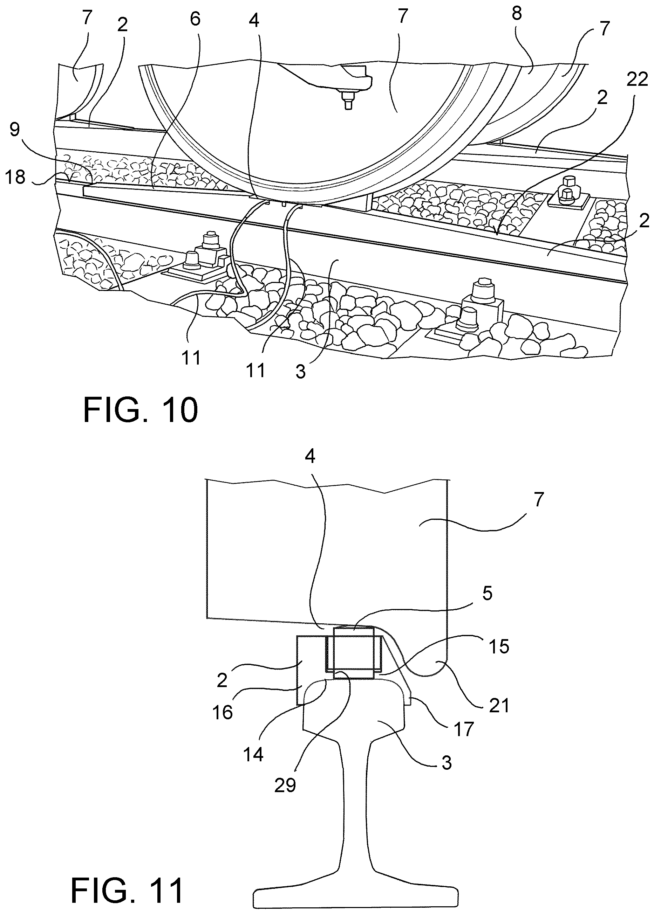

figure 10 shows the weighing system with the detection support applied to a rail profile and a wheel of a rail vehicle resting on a group of load cells in a detection seat of the detection support;
figure 11 shows the situation in figure 10 in a cross-section view according to a vertical support plane of the wheel;

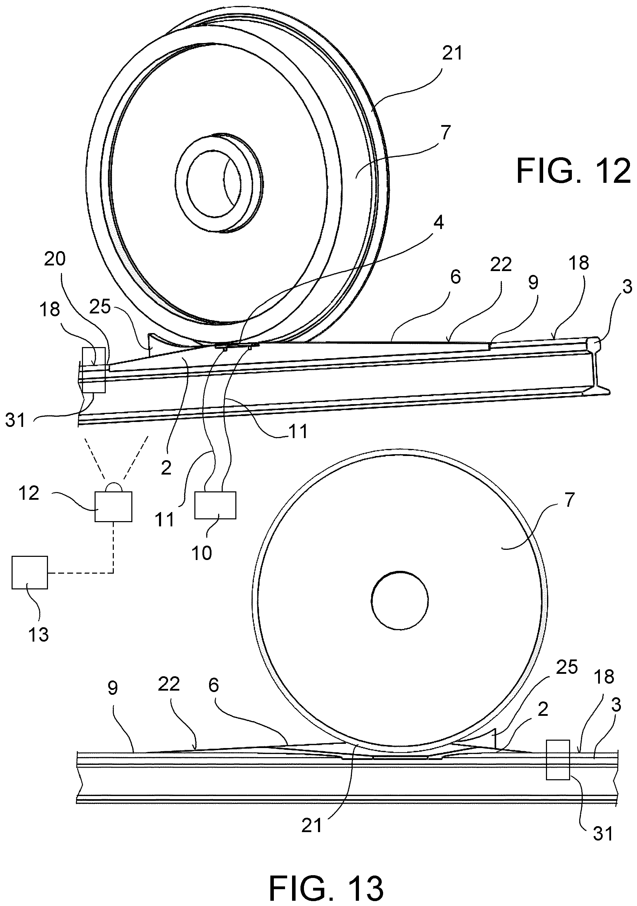

figures 12 and 13 are side views of the weighing system in an operating configuration with the detection support applied to the rail and the wheel of the rail vehicle resting on the detection support.

A weighing system for weighing rail vehicles is globally denoted by reference numeral 1. The system comprises one or more detection supports 2 removably applicable to a rail profile 3, wherein each detection support 2 forms a ramp 6 and a detection seat 4 with at least one load cell 5, wherein the detection seat 4 is suitable for receiving a portion of wheel 7 of the rail vehicle 8 so that the wheel rests directly on the load cell 5 and the ramp 6 forms an inclined rolling surface, extending from a front end 9 of the detection support 2 up to the detection seat 4, so that, when the detection support 2 has been applied onto the rail 3, the wheel 7 of the rail vehicle 8 can roll from the rail 3 over the ramp 6 up into the detection seat 4 where at least one load cell 5 is interposed between the wheel 7 and the rail profile 3.

Thanks to the interposition of one or more load cells 5 between the wheel 7 of the rail vehicle 8 and the rail 3, the wheel 7 rests directly and only on the load cells 5 provided in the detection seat 4, said load cells 5 can accurately detect the weight force transmitted by the wheel 7 regardless of the stiffness of the rail 3 and flexibility of the laying plane and without having to move the rail vehicle 8 off the track. Thanks to the detachable detection support 2 on the rail 3, the weighing of the rail vehicle 8 may be carried out on any section of rail, simply by performing the following steps:
- applying a detection support 2 to the rail profile 3 in front of each wheel 7 of the rail vehicle 8,
- moving the rail vehicle 8 along the rail to roll the wheels 7 from the upper surface of the rail 3 over the ramps 6 as far as the detection seats 4,
- carrying out the weighing by means of the load cells 5 situated in the detection seats 4,
- moving the rail vehicle 8 along the track again (this time in the opposite direction) to make the wheels 7 roll from the detection seat 4 over the ramps 6 as far as the upper surface of the rail 3, and lastly,
- detaching the detection support 2 from the rails 3.

This overcomes the need to prepare a special weighing platform in reinforced concrete, the need for a crane to transfer the rail vehicle onto the weighing platform and the repeated calibration of the load cells to adapt the weighing to the weighing conditions.

In addition, thanks to the fact of providing a single detection support 2 for each wheel 7 of the rail vehicle 8, the detection supports 2 have a reduced weight and dimension and can be applied manually to the rails. This economises and speeds up the weighing operation compared to the systems of the prior art. The weight of a single detection support 2 may be in the range from 15kg to 25kg, preferably approximately 20 kg.

The load cells 5 may be electrical load cells which indirectly detect the mechanical deformation of a metal body (Martensitic Steel hardened by tempering in order to achieve greater stiffness) due to the weight force transmitted by the wheel 7, providing a value in millivolts or in volts and transforming it into the correct unit of measurement (e.g. Newton, or kg). one or more strain gauges are applied to the metal body which read the mechanical compression deformation of the material by means of the variation of electric resistance caused by said deformation on their electric circuit. Four strain gauges mutally connected in a Wheatstone bridge configuration may be used to amplify the magnitude of the signal. The electrical signal obtained may be further amplified by an amplifier before being processed e.g. using an algorithm to calculate the force applied to the load cell 5.

To such purpose, each load cell 5 is in signal connection, via cable 11 or wireless, with a control unit 10 provided with a display to visualize the values measured by each cell. In one embodiment, the control unit or units 10 may in turn be connected via cable or wireless, e.g. via blue tooth technology, to a further processing unit 30, e.g. tablet computer or a microcomputer with processor, memory, and display to process and display and/or store of the values of weight or mass detected for each wheel 7.

In one embodiment, the system 1 comprises a plurality of control units 10, each respectively connected to a single load cell 5, or to a single group of load cells 5 of a single detection support 2. Alternatively, the system comprises a control unit 10 connected to a plurality of said load cells 5 (or to all the load cells 5) of a plurality of said detection supports 2 (or all the detection supports 2).

According to a further embodiment, the weighing system 1 comprises one or more position detectors 12, for example one or more cameras, contact sensors, proximity sensors (e.g. inductive, capacitive, magnetic, ultrasonic, optical) associated or associable with one or more of the detection supports 2 and configured to generate signals indicative of the positioning of the wheel 7 with respect to the detection seat 4 of the detection support 2. The at least one position detector 12 is in signal connection, via cable or wireless, with a remote indicator device 13, such as a display, an audio signal or a video monitor, which can, for example, be positioned inside the cab of a locomotive so as to allow a monitoring of position during the movement of the rail vehicle 8 on the detection supports 2.

The detection support 2 is preferably made of steel and, even more preferably, made in one piece to withstand the high loads to which it is subjected.

The detection support 2 has an elongated shape and on its lower side forms a rail seat 14 in the form of an open channel extending in the longitudinal direction of the detection support 2. The rail seat 14 is delimited by an upper wall 15 suitable to rest from above on the rolling surface of the rail 3, an outer side wall 16 and an inner side wall 17 suitable to embrace the rail profile 3 from two opposite sides. This way, with the detection support 2 applied to the rail 3, the rail seat 14 extends on either side over the head of the rail 3 and ensures the correct mutual positioning of the detection support 2 and the rail 3.

Advantageously, one of the outer 16 and inner side walls 17 has a lesser longitudinal extension than the longitudinal extension of the other side wall to reduce the weight of the detection support 2 and obviate the risk of jamming during the support of the detection support 2 on the rail 3. In particular, the outer side wall 16 may be substantially extended along the full longitudinal length of the detection support 2 and the inner side wall 17 may be extended along a central section 19 at the detection seat 4 without however extending as far as the front end 9 and, preferably, without extending as far as the rear end 20 of the detection support 2. In fact, a presence of the inner side wall 17 in the front end 9 would widen the rolling surface 22 of the ramp 6 and interfere with the guiding appendage 21 of the wheel 7. For this reason, the wall 17 is made only in the support section 2 in which the wheel 7 is already raised from the rail.

This ensures precise positioning of the detection seat 4 and thus of the load cells 5 on the rail 3, as well as an anti-rotation constraint of the detection support 2 in relation to the rail 3.

At the detection seat 4, an upper area of the inner side wall 17 is recessed or inclined towards the detection seat 4, so as not to interfere with and not provide any support for the guiding appendage 21 of the wheel 7 and make the wheel 7 transmit the entire weight onto the load cells 5. This prevents a possible contact of the guiding appendage 21 of the wheel 7 from inducing a translation of the detection support 2 outwards.

The upper wall 15 forms, on an upper side of the detection support 2 opposite the rail seat 14, both the inclined surface 22 of the ramp 6 and the detection seat 4. The detection seat 4 may take the form of a cavity, such as a rectangular cavity with a substantially flat or planar bottom surface 23, bounded by two opposite steps 24, suitable for centring the wheel 7 in relation to the load cell 5 or to the plurality of load cells 5.

Advantageously, detection seat 4 forms at least one hole 29, preferably two holes 29 spaced in a longitudinal direction of the detection support 2 and suitable to respectively house one of the load cells 5, so that the wheel 7 centred or pre-positioned in the detection seat 4 is supported on at least one load cell 5, preferably on both the load cells 5. The positioning of the wheel 7 on two or more load cells spaced in a longitudinal direction permits a high positioning tolerance, e.g. in a tolerance range of approximately 100 mm . This allows accurate weighing even with misalignment of the wheel contact points 7 due to deformation of the bogie - axles - vehicle.

In one embodiment, the holes 29 are through holes which extend through the upper wall 15 from the detection seat 4 into the rail seat 14 and house the load cells 5 so that they directly face the rail seat 14 and extend directly into the detection seat 4.

This way the load cells 5 are interposed in direct contact between the rail and the wheel.

Alternatively, the holes 29 can be blind holes in the upper wall 15 that open only in the detection seat 4 and house the load cells 5 in such a way that they are laid on the upper wall 15 and extend directly into the detection seat 4.

This way the load cells 5 are interposed in direct contact between the upper wall 15 and the wheel 7.

The detection seat 4 may also form one or more channels for cables 28 extending from the holes 29 as far as an outer surface of the outer side wall 16 and suitable to house and protect the cables 11 for connecting the signal between the load cells 5 and the control unit 10.

According to a further embodiment, the detection support 2 may comprise an end stop abutment 25 made on a side of the detection seat 4 opposite the ramp 6 and projecting towards the upper side of the detection support 2 to obstruct or prevent a moving away of the wheel 7 from the detection seat 4 towards a side opposite the ramp 6. The end stop abutment 25 may form a stop surface 26 inclined so as to rise, preferably in a potentially increasing manner, towards the upper side of the support 2 away from the detection seat 4.

The end stop abutment 25 further facilitates the correct positioning of the rail vehicle 8 on the detection supports 2 and the correct alignment of all the detection supports 2 in relation to the wheels 7 of the rail vehicle 8.

In order to economize on the manufacture of the detection support 2, the end stop abutment 25 limit may be manufactured separately from the upper wall 15 and subsequently connected to it by fastening screws 27.

According to a non-limiting embodiment,
- the length of the ramp 6 is in the range from 700mm to 1000mm, preferably about 825mm,
- the maximum height of the ramp 6 measured from the rolling surface 18 of the rail 3 is in the range from 30mm to 50mm, preferably from 35mm to 45mm, even more preferably about 40mm,
- the minimum height of the ramp 6 measured from the rolling surface 18 of the rail 3 is in the range from 0mm to 2mm, preferably about 1mm,
- the length of the detection seat 4 is in the range from 140mm to 180mm, preferably about 160mm,
- the depth of the detection seat 4 or, in other words, the height of the steps 24 is in the range from 6mm to 10mm, preferably about 8mm.

In order to obviate the risk of tipping of the detection support 2, the maximum height of the ramp 6 is less than the width of the rail seat 14 which corresponds approximately to the width of the upper rolling surface 18 of the rail 3.

To keep the detection supports 2 stationary on the rails 3, the system 1 may further comprise one or more support blocks 31 positionable and clampable to the rail 3 in such a way as to form an anti-slip stop of the detection support on the rail 3.

The weighing system 1 operates as follows: In preparation for the weighing of the rail vehicle 8 the detection supports 2 are laid on the rails 3, one in front of each wheel 7 (at the same or substantially equal distances from each wheel) of the rail vehicle 8, the load cells 5 are placed in the detection seats 4 of the detection supports 2 and the rail vehicle 8 is moved along the rail to make the wheels 7 roll from the upper surface of the rail 3 over the ramps 6 up into the detection seats 4. The correct positioning of the wheels 7 in relation to the detection seats 4 can be controlled and monitored via the position detector 12. Now it is possible to perform weighing by means of the load cells 5 connected to the control unit or units 10. After weighing the rail vehicle 8 is moved back along the rail to make the wheels 7 roll from the detection seat 4 over the ramps 6 down to the upper surface of the rails 3 and lastly the detection supports 2 are detached from the rail 3.

From the foregoing description, a person skilled in the art may undoubtedly appreciate how the method and the weighing system 1 achieve the objectives of the invention described in the introduction.

Obviously, a person skilled in the art may make further modifications and variations to the weighing method and system according to the invention so as to satisfy contingent and specific requirements while remaining within the sphere of protection of the invention as defined by the following claims .

## Claims

1. Weighing system (1) for weighing rail vehicles, comprising one or more detection supports (2) removably applicable on a rail (3), wherein each said detection support (2) forms a ramp (6) and a detection seat (4) with at least one load cell (5), wherein said detection seat (4) is suitable for receiving a portion of wheel (7) of the rail vehicle (8) in a manner that the wheel (7) rests directly on the load cell (5) and the ramp (6) forms an inclined rolling surface, extending from a front end (9) of the detection support (2) up to the detection seat (4), so that, when the detection support (2) has been applied onto the rail (3), the wheel (7) of the rail vehicle (8) can roll from the rail (3) over the ramp (6) up into the detection seat (4) **characterized in that** the detection support (2) is elongated in shape and forms, on a lower side thereof, a rail seat (14) shaped like an open channel extending in the longitudinal direction of the detection support (2), wherein said rail seat (14) is delimited by:
- an upper wall (15) suitable for resting from above on the upper rolling surface of the rail (3),
- an outer side wall (16) and an inner side wall (17) suitable for embracing the rail profile (3) on the two opposite sides,
so that, when the detection support (2) has been applied onto the rail (3), the rail seat (14) extends astride over the head of the rail (3).

2. Weighing system (1) according to claim 1, wherein each load cell (5) is in signal connection with a control unit (10) for processing and indicating and/or storing values representative of the detected weight.

3. Weighing system (1) according to claim 1 or 2, wherein the weighing system comprises at least one position detector (12) configured to generate signals indicative of the positioning of the wheel (7) with respect to the detection seat (4), wherein said position detector (12) is in signal connection with a remote indication device (13) for position monitoring during the movement of the rail vehicle (8) on the detection supports (2).

4. Weighing system (1) according to any one of the preceding claims, wherein one of the outer and inner side walls (16, 17) has a shorter longitudinal extension than the other.

5. Weighing system (1) according to claim 4, wherein the outer side wall (16) extends substantially along the entire longitudinal length of the detection support (2) and the inner side wall (17) extends along a central portion (19) of the detection support (2) at the detection seat (4) without extending along the entire longitudinal length of the detection support (2).

6. Weighing system (1) according to one of the preceding claims, wherein, at the detection seat (4), the inner side wall (17) is recessed towards the detection seat (4), so as not to provide any support for a guiding appendage (21) of the wheel (7).

7. Weighing system (1) according to one of the preceding claims, wherein the upper wall (15) forms, on the upper side of the detection support (2) opposite the rail seat (14), both the inclined surface (22) of the ramp (6) and the detection seat (4),
wherein the detection seat (4) forms a cavity suitable for keeping the wheel (7) in a predetermined positioning range with respect to said load cells (5).

8. Weighing system (1) according to one of the previous claims, wherein the detection seat (4) forms two holes 29 spaced in the longitudinal direction of the detection support (2) and each housing one of two load cells (5), so that the wheel (7) which is pre-positioned in the detection seat (4) is supported on both the load cells (5), thereby permitting a high positioning tolerance of the wheel.

9. Weighing system (1) according to one of the previous claims, wherein the detection support (2) comprises an end stop abutment (25) formed on a side of the detection seat (4) opposite the ramp (6) and suitable for preventing the wheel (7) from moving away from the detection seat (4) towards a side opposite to the ramp (6).

10. Weighing system (1) according to claim 8, wherein the holes (29) are through holes which extend through the upper wall (15) from the detection seat (4) into the rail seat (14) and house the load cells (5) so that they directly face the rail seat (14) and extend directly into the detection seat (4) in a manner that the load cells 5 are interposed in direct contact between the rail and the wheel.

11. Weighing system (1) according to claim 8, wherein the holes (29) are blind holes in the upper wall (15) that open only in the detection seat (4) and house the load cells (5) in such a way that they are laid on the upper wall (15) and extend directly into the detection seat (4) in a manner that the load cells (5) are interposed in direct contact between the upper wall (15) and the wheel (7).

12. Weighing system (1) according to any preceding claim, wherein each load cell (5) is in signal connection, via cable (11) or wireless, with a control unit (10) having a display to visualize the values measured by each load cell (5), wherein the one or more control units(10) are in turn be connected via cable or wireless, to a further processing unit (30) with processor, memory, and display to process and display and store of the values of weight or mass detected for each wheel (7).

13. Weighing method for weighing a rail vehicle resting by its wheels on rails of a track, the method comprising:
- resting one or more load cells on said rails in front of each of said wheels,
- resting a ramp on said rails between each of said wheels and said load cells,
- moving the rail vehicle along the track to make the wheels roll from the rails above the ramps until they rest on the load cells,
- carrying out the weighing of the rail vehicle through the load cells
, **characterized by** using a weighing system (1) according to one of the preceding claims.

14. Weighing method according to claim 13, comprising visualizing the values measured by each load cell (5).

15. Weighing method according to claim 13 or 14, comprising storing the values of weight or mass detected for each wheel (7).

## Patentansprüche

1. Wiegesystem (1) für das Wiegen von Schienenfahrzeugen, umfassend einen oder mehrere auf einer Schiene (3) lösbar anbringbare(n) Detektionsträger (2), wobei jeder Detektionsträger (2) eine Rampe (6) und eine Detektionsaufnahme (4) mit mindestens einer Wägezelle (5) bildet, wobei die Detektionsaufnahme (4) dazu geeignet ist, einen Teil des Rades (7) des Schienenfahrzeugs (8) so aufzunehmen, dass das Rad (7) direkt auf der Wägezelle (5) aufliegt, und die Rampe (6) eine geneigte Abrollfläche bildet, die sich von einem vorderen Ende (9) des Detektionsträgers (2) bis zu der Detektionsaufnahme (4) erstreckt, sodass nach Aufbringen des Detektionsträgers (2) auf die Schiene (3) das Rad (7) des Schienenfahrzeugs (8) von der Schiene (3) über die Rampe (6) bis hoch in die Detektionsaufnahme (4) rollen kann, **dadurch gekennzeichnet, dass** der Detektionsträger (2) länglich geformt ist und an einer Unterseite davon eine Schienenaufnahme (14) bildet, die wie ein offener Kanal geformt ist und sich in Längsrichtung des Detektionsträgers (2) erstreckt, wobei die Schienenaufnahme (14) begrenzt wird durch:
- eine obere Wand (15), die zum Aufliegen von oben auf der oberen Rollfläche der Schiene (3) geeignet ist,
- eine äußere Seitenwand (16) und eine innere Seitenwand (17), die geeignet sind, das Schienenprofil (3) an den beiden gegenüberliegenden Seiten zu umgreifen,
sodass sich die Schienenaufnahme (14) rittlings über den Kopf der Schiene (3) erstreckt, wenn der Detektionsträger (2) auf die Schiene (3) aufgebracht worden ist.

2. Wiegesystem (1) nach Anspruch 1, wobei jede Wägezelle (5) mit einer Steuereinheit (10) in Signalverbindung steht, um Werte zu verarbeiten und anzuzeigen und/oder zu speichern, die für das erfasste Gewicht repräsentativ sind.

3. Wiegesystem (1) nach Anspruch 1 oder 2, wobei das Wiegesystem mindestens einen Positionsdetektor (12) umfasst, der konfiguriert ist, um Signale zu erzeugen, die die Positionierung des Rades (7) in Bezug auf die Detektionsaufnahme (4) anzeigen, wobei der Positionsdetektor (12) mit einer Fernanzeigeeinrichtung (13) zur Positionsüberwachung während der Bewegung des Schienenfahrzeugs (8) auf den Detektionsträgern (2) in Signalverbindung steht.

4. Wiegesystem (1) nach einem der vorhergehenden Ansprüche, wobei eine der äußeren und inneren Seitenwände (16, 17) eine kürzere Längserstreckung als die andere aufweist.

5. Wiegesystem (1) nach Anspruch 4, wobei sich die äußere Seitenwand (16) im Wesentlichen entlang der gesamten Längslänge des Detektionsträgers (2) erstreckt und sich die innere Seitenwand (17) entlang eines zentralen Abschnitts (19) des Detektionsträgers (2) an der Detektionsaufnahme (4) erstreckt, ohne sich über die gesamte Längslänge des Detektionsträgers (2) zu erstrecken.

6. Wiegesystem (1) nach einem der vorhergehenden Ansprüche, wobei an der Detektionsaufnahme (4) die innere Seitenwand (17) zu der Detektionsaufnahme (4) hin ausgespart ist, um einen Führungsfortsatz (21) des Rades (7) nicht abzustützen.

7. Wiegesystem (1) nach einem der vorhergehenden Ansprüche, wobei die obere Wand (15) auf der der Schienenaufnahme (14) gegenüberliegenden Oberseite des Detektionsträgers (2) sowohl die Schrägfläche (22) der Rampe (6) und der Detektionsaufnahme (4) bildet,
wobei die Detektionsaufnahme (4) einen Hohlraum bildet, der geeignet ist, das Rad (7) in einem vorbestimmten Positionierungsbereich in Bezug auf die Wägezellen (5) zu halten.

8. Wiegesystem (1) nach einem der vorhergehenden Ansprüche, wobei die Detektionsaufnahme (4) zwei in Längsrichtung des Detektionsträgers (2) beabstandete Löcher 29 bildet und jedes eine von zwei Wägezellen (5) aufnimmt, sodass sich das in der Detektionsaufnahme (4) vorpositionierte Rad (7) auf beiden Wägezellen (5) abstützt und so eine hohe Positionierungstoleranz des Rades ermöglicht.

9. Wiegesystem (1) nach einem der vorhergehenden Ansprüche, wobei der Detektionsträger (2) einen Endanschlag (25) aufweist, der an einer der Rampe (6) gegenüberliegenden Seite der Detektionsaufnahme (4) ausgebildet und geeignet ist, um zu verhindern, dass sich das Rad (7) von der Detektionsaufnahme (4) weg in Richtung einer der Rampe (6) gegenüberliegenden Seite bewegen.

10. Wiegesystem (1) nach Anspruch 8, wobei die Löcher (29) Durchgangslöcher sind, die sich durch die obere Wand (15) von der Detektionsaufnahme (4) in die Schienenaufnahme (14) erstrecken und die Wägezellen (5) aufnehmen, sodass sie direkt der Schienenaufnahme (14) zugewandt sind und sich direkt in die Detektionsaufnahme (4) hinein erstrecken, sodass die Wägezellen 5 in direktem Kontakt zwischen der Schiene und dem Rad angeordnet sind.

11. Wiegesystem (1) nach Anspruch 8, wobei die Löcher (29) Sacklöcher in der oberen Wand (15) sind, die nur in die Detektionsaufnahme (4) münden und die Wägezellen (5) so aufnehmen, dass sie auf die obere Wand (15) aufgelegt sind und sich direkt in die Detektionsaufnahme (4) erstrecken, sodass die Wägezellen (5) in direktem Kontakt zwischen der oberen Wand (15) und dem Rad (7) angeordnet sind.

12. Wiegesystem (1) nach einem der vorhergehenden Ansprüche, wobei jede Wägezelle (5) über ein Kabel (11) oder drahtlos mit einer Steuereinheit (10) in Signalverbindung steht, die eine Anzeige zur Visualisierung der von jeder Wägezelle gemessenen Werte aufweist (5), wobei die eine oder mehreren Steuereinheiten (10) ihrerseits über Kabel oder Funk mit einer weiteren Verarbeitungseinheit (30) mit Prozessor, Speicher und Anzeige verbunden sind, um die für jedes Rad (7) erfassten Gewichts- oder Massenwerte zu verarbeiten und anzuzeigen und zu speichern.

13. Wiegeverfahren zum Wiegen eines Schienenfahrzeugs, das mit seinen Rädern auf Schienen eines Gleises ruht, wobei das Verfahren umfasst:
- Aufliegen einer oder mehrerer Wägezellen auf den Schienen vor jedem der Räder,
- Aufliegen einer Rampe auf den Schienen zwischen jedem der Räder und den Wägezellen,
- Bewegen des Schienenfahrzeugs entlang der Strecke, damit die Räder von den Schienen über den Rampen rollen, bis sie auf den Wägezellen aufliegen,
- Durchführen des Wiegens des Schienenfahrzeugs durch die Wägezellen,
**gekennzeichnet durch** Verwendung eines Wiegesystems (1) nach einem der vorhergehenden Ansprüche.

14. Wiegeverfahren nach Anspruch 13, umfassend das Visualisieren der von jeder Wägezelle (5) gemessenen Werte.

15. Wiegeverfahren nach Anspruch 13 oder 14, umfassend das Speichern der für jedes Rad (7) erfassten Gewichts- oder Massenwerte.

## Revendications

1. Système de pesage (1) pour le pesage des véhicules ferroviaires, comprenant un ou plusieurs supports de détection (2) applicables de manière amovible sur un rail (3), dans lequel chaque support de détection (2) forme une rampe (6) et un siège de détection (4) avec au moins une cellule de charge (5), dans lequel ledit siège de détection (4) est approprié pour recevoir une portion de la roue (7) du véhicule ferroviaire (8) de manière à ce que la roue (7) repose directement sur la cellule de charge (5) et que la rampe (6) forme une surface de roulement inclinée, qui s'étend d'une extrémité avant (9) du support de détection (2) en montant jusqu'au siège de détection (4), de sorte que, lorsque le support de détection (2) a été appliqué sur le rail (3), la roue (7) du véhicule ferroviaire (8) puisse rouler du rail (3) sur la rampe (6) en montant jusqu'au siège de détection (4), **caractérisé en ce que** le support de détection (2) est de forme allongée et forme, sur sa face inférieure, un siège de rail (14) en forme de canal ouvert s'étendant dans la direction longitudinale du support de détection (2), dans lequel ledit siège de rail (14) est délimité par :
- une paroi supérieure (15) appropriée pour reposer depuis le dessus sur la surface de roulement supérieure du rail (3),
- une paroi latérale externe (16) et une paroi latérale interne (17) appropriées pour entourer le profilé de rail (3) sur les deux côtés opposés,
de sorte que, lorsque le support de détection (2) a été appliqué sur le rail (3), le siège de rail (14) s'étende à cheval sur la tête du rail (3).

2. Système de pesage (1) selon la revendication 1, dans lequel chaque cellule de charge (5) est en connexion de signal avec une unité de commande (10) pour traiter et indiquer et/ou stocker des valeurs représentatives du poids détecté.

3. Système de pesage (1) selon la revendication 1 ou 2, dans lequel le système de pesage comprend au moins un détecteur de position (12) conçu pour générer des signaux indicatifs du positionnement de la roue (7) par rapport au siège de détection (4), dans lequel ledit détecteur de position (12) est en connexion de signal avec un dispositif d'indication à distance (13) pour la surveillance de position pendant le mouvement du véhicule ferroviaire (8) sur les supports de détection (2).

4. Système de pesage (1) selon l'une quelconque des revendications précédentes, dans lequel l'une des parois latérales externe et interne (16, 17) a une extension longitudinale plus courte que l'autre.

5. Système de pesage (1) selon la revendication 4, dans lequel la paroi latérale externe (16) s'étend sensiblement sur toute la longueur longitudinale du support de détection (2) et la paroi latérale interne (17) s'étend le long d'une portion centrale (19) du support de détection (2) au niveau du siège de détection (4) sans s'étendre sur toute la longueur longitudinale du support de détection (2).

6. Système de pesage (1) selon l'une des revendications précédentes, dans lequel, au niveau du siège de détection (4), la paroi latérale interne (17) est en retrait vers le siège de détection (4), afin de ne fournir aucun support pour un appendice de guidage (21) de la roue (7).

7. Système de pesage (1) selon l'une des revendications précédentes, dans lequel la paroi supérieure (15) forme, sur la face supérieure du support de détection (2) en face du siège de rail (14), la surface inclinée (22) de la rampe (6) et le siège de détection (4),
dans lequel le siège de détection (4) forme une cavité apte à maintenir la roue (7) dans une plage de positionnement prédéfinie par rapport auxdites cellules de charge (5).

8. Système de pesage (1) selon l'une des revendications précédentes, dans lequel le siège de détection (4) forme deux trous (29) espacés dans la direction longitudinale du support de détection (2) et chacun logeant chacun l'une des deux cellules de charge (5), de sorte que la roue (7) qui est pré-positionnée dans le siège de détection (4) soit supportée par les deux cellules de charge (5), permettant ainsi une tolérance de positionnement élevée de la roue.

9. Système de pesage (1) selon l'une des revendications précédentes, dans lequel le support de détection (2) comprend une butée d'arrêt d'extrémité (25) formée sur un côté du siège de détection (4) opposé à la rampe (6) et appropriée pour empêcher la roue (7) de s'éloigner du siège de détection (4) vers un côté opposé à la rampe (6).

10. Système de pesage (1) selon la revendication 8, dans lequel les trous (29) sont des trous traversants qui s'étendent à travers la paroi supérieure (15), du siège de détection (4) dans le siège de rail (14), et logent les cellules de charge (5). de sorte qu'elles fassent directement face au siège de rail (14) et s'étendent directement dans le siège de détection (4) de manière à ce que les cellules de charge (5) soient interposées en contact direct entre le rail et la roue.

11. Système de pesage (1) selon la revendication 8, dans lequel les trous (29) sont des trous borgnes dans la paroi supérieure (15) qui ne s'ouvrent que dans le siège de détection (4) et logent les cellules de charge (5) de telle sorte qu'elles soient posées sur la paroi supérieure (15) et s'étendent directement dans le siège de détection (4) de manière à ce que les cellules de charge (5) soient interposées en contact direct entre la paroi supérieure (15) et la roue (7).

12. Système de pesage (1) selon l'une quelconque des revendications précédentes, dans lequel chaque cellule de charge (5) est en connexion de signal, par un câble (11) ou sans fil, avec une unité de commande (10) ayant un affichage pour visualiser les valeurs mesurées par chaque cellule de charge (5), dans lequel la ou les unités de commande (10) sont à leur tour connectées par câble ou sans fil, à une autre unité de traitement (30) avec un processeur, une mémoire et un affichage pour traiter et afficher et stocker les valeurs de poids ou de masse détectées pour chaque roue (7).

13. Procédé de pesage pour le pesage d'un véhicule ferroviaire reposant par ses roues sur des rails d'une voie, le procédé comprenant :
- l'appui d'une ou de plusieurs cellules de charge sur lesdits rails devant chacune desdites roues,
- l'appui d'une rampe sur lesdits rails entre chacune desdites roues et desdites cellules de charge,
- le déplacement du véhicule ferroviaire le long de la voie pour faire rouler les roues depuis les rails au-dessus des rampes jusqu'à ce qu'elles reposent sur les cellules de charge,
- la réalisation du pesage du véhicule ferroviaire à travers les cellules de charge,
**caractérisé par** l'utilisation d'un système de pesage (1) selon l'une des revendications précédentes.

14. Procédé de pesage selon la revendication 13, comprenant la visualisation des valeurs mesurées par chaque cellule de charge (5).

15. Procédé de pesage selon la revendication 13 ou 14, comprenant le stockage des valeurs de poids ou de masse détectées pour chaque roue (7).
